# EUROPÄISCHE PATENTSCHRIFT

(11) **EP 0 778 290 B1**
(45) Veröffentlichungstag und Bekanntmachung des Hinweises auf die Patenterteilung: **14.07.1999**
(21) Anmeldenummer: 96119133.5
(22) Anmeldetag: 29.11.1996
(51) Int. Cl.: C08F 4/40, C09J 157/00

(54) **Redoxkatalysatorsystem zur Initiierung von Emulsionspolymerisationen**
Redox catalyst for the initiation of emulsion polymerization
Catalyseur redox pour l'inition d'une polymérisation en émulsion

(30) Priorität: 07.12.1995 DE 19545609
(43) Veröffentlichungstag der Anmeldung: 11.06.1997
(73) Patentinhaber: Clariant GmbH, 65929 Frankfurt am Main (DE)
(72) Erfinder: Jakob, Martin, Dr., 65779 Kelkheim (DE)

(56) Entgegenhaltungen:
- US-A- 3 438 941
- US-A- 4 360 632

## Beschreibung

Die vorliegende Erfindung betrifft ein neuartiges Redoxkatalysatorsystem, ein Verfahren zur Herstellung von Dispersionen durch Emulsionspolymerisation von Vinylverbindungen mit Hilfe dieses Katalysatorsystems, des weiteren Dispersionen, insbesondere solche auf Polyvinylester-Basis, welche mit Hilfe dieses Katalysatorsystems hergestellt wurden sowie deren Verwendung als wasser-resistente und Formaldehyd-freie Klebstoffe für poröse und semiporöse Substrate.

Redoxkatalysatorsysteme werden weitverbreitet zur Initiierung der radikalischen Emulsionspolymerisation von Vinylverbindungen eingesetzt. Ihre Vorteile gegenüber einkomponentigen thermisch dissoziativen Initiatoren liegen allgemein in einer kurzen Induktionsperiode sowie einer niedrigen Aktivierungsenergie, die eine Polymerisation mit niedriger Temperaturführung und daraus resultierenden hohen Molekulargewichten der Polymeren gestattet. Zahlreiche Kombinationen von Redoxkatalysatorsystemen sind sowohl in der wissenschaftlichen Literatur als auch in der Patentliteratur beschrieben worden. Häufig verwendete Redox-Paar-Kombinationen bestehen aus den Oxidationsmitteln Wasserstoffperoxid, Benzoylperoxid, Alkylhydroperoxiden, Peroxodisulfaten einerseits und Reduktionsmitteln wie Übergangsmetallionen, beispielsweise Fe²⁺, Carbonsäuren wie Ascorbinsäure oder Weinsäure, S-Verbindungen wie Natriumhydrogensulfit, Zink- oder Natriumformaldehydsulfoxylat usw. andererseits. Ausführliche Zusammenstellungen über Redoxpolymerisationen finden sich in der Fachliteratur, beispielsweise von G. S. Misra und U. D. N. Bajpai in Prog. Polym. Sci. **8**, 61-131 (1982).

Zur Herstellung von homo- und copolymeren Polyvinylesterdispersionen beispielsweise für den Klebstoffbereich, insbesondere von solchen, welche mit Schutzkolloiden wie Polyvinylalkohol stabilisiert werden, werden ebenfalls häufig Redoxkatalysatorsysteme zur Initiierung der Polymerisation eingesetzt. Dies verdeutlichen die Schriften DE-A 44 20 484 (tert.-Butylhydroperoxid/ Natriumformaldehydsulfoxylat), EP-A 0 623 661 (Ammoniumperoxodisulfat/Fe²⁺ /Natriumformaldehydsulfoxylat), DE-A 39 42 628, EP-A 0 394 774 und DE-C 26 20 738 (alle tert.-Butylhydroperoxid/Natriumformaldehydsulfoxylat). Gemäß DE-C 26 20 738 bietet die Verwendung des dort verwendeten Redoxkatalysatorsystems tert.-Butylhydroperoxid/Natriumformaldehydsulfoxylat über die dadurch ermöglichten Pfropfreaktionen des Vinylesters auf das Schutzkolloid Polyvinylalkohol insbesondere den Vorteil einer Verbesserung der Wasserfestigkeit der verfilmten Dispersionen.

Stand der Technik ist auch die Verwendung von Redoxkatalysatorsystemen zur Herstellung von Vinylacetat/Ethylen-Emulsionscopolymerisaten, bei denen die Reduktionskomponente ein Hydrogensulfitaddukt an eine Carbonylverbindung, beispielsweise an ein Keton, an Glyoxal oder ein Glyoxalderivat wie Methylglyoxal sein kann oder auch ein Addukt verschiedener weiterer S-Verbindungen an Glyoxal oder Methylglyoxal. DE-A 32 39 212 ( 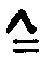 US-A 4 360 632) beschreibt die Herstellung von Latices mit Hilfe eines Formaldehyd-freien Redoxkatalysatorsystems, bestehend aus einem Oxidationsmittel (beispielsweise tert.-Butylhydroperoxid) und einem wasserlöslichen Addukt von Natriumhydrogensulfit an ein Keton mit 3 bis 8 C-Atomen als Reduktionsmittel (beispielsweise Acetonnatriumhydrogensulfit). Das bevorzugt verwendete Monomersystem besteht aus Vinylacetat, Ethylen und weiteren funktionellen Comonomeren.

Die Schriften DE-A 26 49 532, JP-A 55 709/77 und JP-A 99 096/85 haben Formaldehyd-freie Redoxkatalysatorsysteme zum Gegenstand, die neben einem Oxidationsmittel Umsetzungsprodukte des Glyoxals oder Methylglyoxals mit reduzierenden Schwefel/Sauerstoff-Verbindungen wie Alkali-, Ammonium oder Zinksalze der Thioschwefelsäure, Dithionigen Säure, Dischwefligen Säure, Natriumhydrogensulfit oder Kaliumhydrogensulfit enthalten. Konkret verwendet werden Alkalihydrogensulfitaddukte an Glyoxal. Es handelt sich um Vinylacetat/Ethylen-Copolymerisate, die gegebenenfalls noch weitere vernetzbare Comonomere wie beispielsweise n-Butoxymethylacrylamid enthalten. Die Produkte eignen sich als Formaldehyd-freie Bindemittel für Non-Woven und Papier, jedoch läßt sich unter Verwendung von Glyoxalderivaten kein Effekt im gewünschten Ausmaß hinsichtlich der Wasserfestigkeit erzielen (Vergleichsbeispiel 1).

Aus US-A 3 438 941 bekannt ist ferner die Verwendung eines mit Salzsäure auf einen pH von unter 1,5 angesäuerten Addukts von Natriumhydrogensulfit an Polyacrolein als Reduktionsmittel, in Kombination mit einem Oxidationsmittelgemisch aus Ammoniumpersulfat und tert.-Butylhydroperoxid, speziell zur Emulsionspolymerisation von α,β-ungesättigten Aldehyden wie Acrolein, wobei das als Reduktionsmittel verwendete Addukt unter Einsatz entsprechend großer Mengen gleichzeitig als Stabilisierungsmittel fungiert. Die in US-A 3 438 941 beschriebenen Polymerisationsbedingungen sind jedoch aufgrund des niedrigen pH-Werts ungeeignet für die Polymerisation von Vinylestern.

In der neueren Literatur finden sich weiterhin Arbeiten über die Entwicklung von Redoxkatalysatorsystemen für die Emulsionspolymerisation von Vinylestern in Gegenwart von Polyvinylalkohol als Schutzkolloid, insbesondere von reinem Vinylacetat. Als Reduktionskomponente in Kombination mit Peroxodisulfaten werden Hydrogensulfitaddukte an monofunktionelle Carbonylverbindungen eingesetzt. R. M. Mohsen et al. beschreiben in Pigment and Resin Technology Heft Juli/August, S. 4-6, 17 (1993), die Herstellung von mit Polyvinylalkohol stabilisierten Polyvinylacetatdispersionen für Klebstoffe mit Hilfe des Redoxkatalysatorsystems Kaliumperoxodisulfat/Octanal (natriumhydrogensulfit). A. S. Badran et al. beschreiben Emulsionspolymerisationen von Vinylacetat in Gegenwart von Polyvinylalkohol mit Hilfe der Katalysatorsysteme Kaliumperoxodisulfat/Salicylaldehyd(natriumhydrogensulfit) in Acta Polym. **42**, 1 (1991), Kaliumperoxodisulfat/Aceton(natriumhydrogensulfit) in Acta Polym. **41**, 187 (1990) und Kaliumperoxodisulfat/Cyclohexanon (natriumhydrogensulfit) in J. Polym. Sci. A **28**, 411 (1990). Redoxkatalysatorsysteme mit den Reduktionsmitteln Benzaldehyd(natriumhydrogensulfit), Acetaldehyd(natriumhydrogensulfit) und Methylpropylketon(natriumhydrogensulfit) sind von A. S. Badran et. al. in J. Appl. Polym. Sci. **49**, 187 (1993) beschrieben. Ein Nachteil der Verwendung monofunktioneller Hydrogensulfit-Addukte als Reduktionsmittel im Redox-System besteht darin, daß ebenfalls kein Effekt im gewünschten Ausmaß hinsichtlich der Wasserfestigkeit bei Holzverleimung erreichbar ist (Vergleichsbeispiel 3).

Polyvinylesterdispersionen, die als Klebstoff für semiporöse und poröse Substrate Verwendung finden, werden für normgerechte wasserfeste Verklebungen eingesetzt. Durch nachträgliche Zugabe diverser Vernetzungsmittel, beispielsweise maskierter polyfunktioneller Aldehyde mit mindestens 3 Kohlenstoffatomen (nicht vorveröffentlichte DE-A 44 20 484), maskierter polyfunktioneller Isocyanate (EP-A 0 206 059) oder Verwendung von vernetzbaren Comonomeren wie N-Methylolacrylamid oder verwandten Verbindungen (DE-C 26 20 738, DE-A 39 42 628 und EP-A 0 394 774) oder durch eine Kombination beider Maßnahmen (DE-A 44 20 484 sowie EP-A 623 661) kann die Wasserresistenz der verfilmten Polyvinylesterdispersionen stark verbessert werden bis hin zu Kochwasserbeständigkeit, insbesondere bei Präsenz von Lewis-sauren, durch das Schutzkolloid komplexierbaren Verbindungen wie beispielsweise Aluminium(III)-Salzen, wobei eine acide Einstellung der wäßrigen Phase resultiert.

In letzter Zeit ist die Industrie bemüht, die Verwendung von Komponenten, die Formaldehyd in freier oder gebundener Form als Depotformaldehyd, der bei einem Vernetzungsschritt freigesetzt werden kann, enthalten, wie beispielsweise Formaldehydharze, N-Methylol(meth)acrylamid als Monomer oder Natriumformaldehydsulfoxylat als Bestandteil eines Redoxkatalysatorsystems, auch auf dem Klebstoff- und Leimgebiet aus toxikologischen Gründen möglichst zu vermeiden. Aufgabe der vorliegenden Erfindung war daher die Entwicklung eines Verfahrens zur möglichst einfachen und kostengünstigen Herstellung von Formaldehydfreien homo- und copolymeren Dispersionen, insbesondere von Polyvinyldispersionen, die mit Schutzkolloiden wie Polyvinylalkohol stabilisiert werden und die sich bei Bedarf nach Zusatz eines sauren Härters wie Aluminiumchlorid zur wasserfesten Holzverleimung, insbesondere unter Erfüllung der hohen Prüfklasse D4 nach der Prüfnorm DIN EN 204 eignen.

Die Aufgabe wurde durch Einsatz eines Redoxkatalysatorsystems gelöst, das als Reduktionskomponente ein mindestens bifunktionelles Hydrogensulfitaddukt enthält.

Gegenstand dieser Erfindung ist ein Redoxkatalysatorsystem, bestehend aus mindestens einem Oxidationsmittel und mindestens einem Reduktionsmittel, das einen wenigstens bifunktionellen, vollständig als Hydrogensulfitaddukt maskierten Aldehyd mit mindestens 3 Kohlenstoffatomen enthält.

Als Oxidationskomponente des erfindungsgemäßen Redoxkatalysatorsystems eignen sich grundsätzlich wasserlösliche Verbindungen mit mindestens einer Azo- oder Peroxidgruppe wie Azoisobutyronitril, Wasserstoffperoxid, Peroxodiphosphate, beispielsweise Ammonium-, Natrium- und Kaliumperoxodiphosphat, Peroxosulfate, beispielsweise Ammonium-, Natrium- und Kaliumpersulfat, Ammonium-, Natrium- und Kaliumperoxodisulfat sowie organische Hydroperoxide, beispielsweise Alkylhydroperoxide. Die Verwendung von aliphatischen Alkylhydroperoxiden, insbesondere tert.-Butylhydroperoxid ist besonders bevorzugt. Es können auch Gemische aus verschiedenen Oxidationsmitteln eingesetzt werden.

Die als erfindungsgemäßer Bestandteil der Reduktionskomponente verwendeten wenigstens bifunktionellen, vollständig als Hydrogensulfitaddukt maskierten Aldehyde mit mindestens 3 Kohlenstoffatomen sind beispielsweise die wasserlöslichen oder in Wasser suspendierbaren Bisalkalihydrogensulfitaddukte, vorzugsweise an Malonaldehyd, Succinaldehyd, 2-Hydroxysuccinaldehyd, Glutaraldehyd, 3-Methylglutaraldehyd, 3-Hydroxyglutaraldehyd, Adipaldehyd, Heptandial, Octandial, Nonandial, Decandial sowie cis- und trans-2-Butendial oder Polyaddukte der Alkalihydrogensulfite an Polyacrolein oder Dialdehydstärken. Die Addukte des Natrium- oder Kaliumhydrogensulfits an diese Aldehyde sind bevorzugt. Besonders bevorzugte Komponenten sind die Addukte von Natrium- oder Kaliumhydrogensulfit an den Glutaraldehyd und Succinaldehyd, insbesondere Glutaraldehydbis(natriumhydrogensulfit) und Succinaldehydbis(natriumhydrogensulfit). Es können auch Gemische verschiedener Addukte eingesetzt werden.

Weitere Reduktionsmittel, die mit den mindestens bifunktionellen, vollständig als Hydrogensulfitaddukt maskierten Aldehyden mit mindestens 3 Kohlenstoffatomen kombiniert werden können, sind Übergangsmetallionen, beispielsweise des Fe(ll), Fe(lll), Co(ll), Mn(lll), weiterhin Ascorbinsäure, Weinsäure, Hydroxylamin, Natriumphosphit, Verbindungen wie Thioharnstoff, Natriumthiosulfat, Natrium- und Zinksalze der Hydroxymethansulfinsäure sowie insbesondere die Salze Natriumdisulfit (Natriumpyrosulfit), Natriumsulfit und Natriumhydrogensulfit. Häufig enthalten im Handel erhältliche Hydrogensulfitaddukte an mindestens bifunktionelle Aldehyde ohnehin schon kleine Mengen an freiem Hydrogensulfit vom Herstellungsprozeß.

Das molare Verhältnis zwischen der oxidierenden Gruppen im Oxidationsmittel und der reduzierenden Gruppen im Reduktionsmittel beträgt vorzugsweise 1 : 0,01 bis 1 : 100. Dieses kann von den jeweilig verwendeten Stoffkombinationen und von der Stöchiometrie der jeweils anzuwendenden Redoxgleichungen abhängen. Im Falle der bevorzugten Redoxkombinationen aus tert.-Butylhydroperoxid und den vollständig als Hydrogensulfitaddukt maskierten, mindestens bifunktionellen Aldehyden mit mindestens 3 Kohlenstoffatomen wird das Hydrogensulfitaddukt in einem molaren Verhältnis zum Oxidationsmittel von vorzugsweise 1 : 1 bis 100 : 1, insbesondere in einem molaren Verhältnis von 2 : 1 bis 30 : 1 eingesetzt.

Werden neben diesem erfindungsgemäßen Hydrogensulfitaddukt weitere Reduktionsmittel mitverwendet, beträgt der Gewichtsanteil der Hydrogensulfitaddukte an die mindestens bifunktionellen Aldehyde mindestens 50 % an der Gesamtmasse aller Reduktionsmittel, vorzugsweise mindestens 75 %, insbesondere mindestens 90 %.

Ein besonders bevorzugtes Redoxkatalyatorsystem besteht aus tert.-Butylhydroperoxid und Glutaraldehydbis(natriumhydrogensulfit) oder Succinaldehydbis(natriumhydrogensulfit).

Gegenstand der Erfindung ist auch ein Verfahren zur Herstellung von Kunststoffdispersionen durch Emulsionspolymerisation von Vinylverbindungen, vorzugsweise Vinylestern, unter Einsatz des erfindungsgemäßen Redoxkatalysatorsystems.

Die Einsatzmenge des Oxidationsmittels, bezogen auf die Gesamtmasse der Monomeren, beträgt vorzugsweise 0,005 bis 3 %, insbesondere 0,01 bis 0,1 %.

Die Gesamtmasse der Reduktionskomponenten, bezogen auf die Gesamtmasse der Monomere, beträgt vorzugsweise 0,01 bis 4 Gew.-%, insbesondere 0,1 bis 1,2 Gew.-%.

Vorzugsweise werden unter Einsatz des erfindungsgemäßen Redoxkatalysatorsystems Homo- oder Copolymerisate von Vinylestern hergestellt, die die folgenden Monomergruppen enthalten:
a) Vinylester, insbesondere mit 1 bis 18 Kohlenstoffatomen im Säurerest, beispielsweise Vinylformiat, Vinylacetat, Vinylpropionat, Vinylisobutyrat, Vinylpivalat, Vinyl-2-ethylhexanoat, Vinylester von gesättigten verzweigten Monocarbonsäuren mit 9 bis 10 Kohlenstoffatomen im Säurerest, Vinylester von längerkettigen gesättigten oder ungesättigten Fettsäuren wie beispielsweise Vinyllaurat, Vinylstearat sowie Vinylester der Benzoesäure und substituierter Derivate der Benzoesäure wie Vinyl-p-tert.-butylbenzoat. Unter diesen ist die ausschließliche Verwendung von Vinylacetat zur Bildung eines Homopolymerisats besonders bevorzugt. Weiterhin genannte Vinylester können mit Vinylacetat bis zu einem Anteil von 50 Gew.-% copolymerisiert werden. Der Gesamtanteil aller Vinylester im Polymerisat beträgt vorzugsweise mindestens 50 Gew.-%, insbesondere 75 bis 100 Gew.- %.
b) α,β-ungesättigte Carbonsäuren, beispielsweise Acrylsäure, Methacrylsäure, sowie deren Ester mit primären und sekundären gesättigten einwertigen Alkoholen mit 1 bis 18 Kohlenstoffatomen, beispielsweise Methanol, Ethanol, Propanol, Butanol, 2-Ethylhexylalkohol, cycloaliphatischen Alkoholen sowie längerkettigen Fettalkoholen. Weiterhin können α,β-ungesättigte Dicarbonsäuren, beispielsweise Maleinsäure, Fumarsäure, Itaconsäure oder Citraconsäure, sowie deren Mono- oder Diester mit gesättigten einwertigen aliphatischen Alkoholen mit 1 bis 18 Kohlenstoffatomen miteinpolymerisiert werden. Der Anteil dieser Comonomere an der Gesamtmonomerenmenge beträgt bis zu 25 Gew.-%, vorzugsweise 1 bis 15 Gew.-%.
c) Ethylenisch ungesättigte Kohlenwasserstoffe, wie Ethylen oder α-Olefine mit 3 bis 18 Kohlenstoffatomen, beispielsweise Propylen, Butylen, ferner Styrol, Vinyltoluol, Vinylxylol sowie halogenierte ungesättigte aliphatische Kohlenwasserstoffe, beispielsweise Vinylchlorid, Vinylfluorid, Vinylidenchlorid, Vinylidenfluorid. Der Anteil dieser Comonomere an der Gesamtmonomerenmenge beträgt bis zu 50 Gew.-%, vorzugsweise 1 bis 25 Gew.-%.
d) Mehrfach ethylenisch ungesättigte Monomere beispielsweise Diallylphthalat, Diallylmaleinat, Triallylcyanurat, Tetraallyloxyethan, Divinylbenzol, Butandiol-1,4-dimethacrylat, Triethylenglykoldimethacrylat, Divinyladipat, Allyl(meth)-acrylat, Vinylcrotonat, Methylenbisacrylamid, Hexandioldiacrylat, Pentaerythroldiacrylat und Trimethylolpropantriacrylat. Der Anteil von Monomeren aus dieser Gruppe beträgt bis zu 10 Gew.-%, vorzugsweise 0,01 bis 2 Gew.-%.
e) Stickstoff-funktionelle Monomere wie (Meth)acrylamid, Allylcarbamat, Acrylnitril, N-Methylol(meth)acrylamid, N-Methylolallylcarbamat sowie die N-Methylolester, -alkylether oder Mannichbasen des N-Methylol(meth)acrylamids oder N-Methylolallylcarbamats, Acrylamidoglykolsäure, Acrylamidomethoxyessigsäuremethylester, N-(2,2-Dimethoxy-1-hydroxyethyl)acrylamid, N-Dimethylaminopropyl(meth)acrylamid, N-Alkyl(meth)acrylamide, p-Hydroxyphenyl(meth)acrylamid, N-(3-Hydroxy-2,2-dimethylpropyl)methacrylamid, Ethylimidazolidonmethacrylat, N-Vinylformamid, N-Vinylpyrrolidon. Der Anteil dieser Comonomere an der Gesamtmonomerenmenge beträgt bis zu 15 Gew.-%, vorzugsweise zu 0,1 bis 10 Gew.-%.
f) Hydroxyfunktionelle Monomere wie Hydroxyethyl(meth)acrylat, Hydroxypropyl(meth)acrylat sowie deren Addukte mit Ethylenoxid oder Propylenoxid. Der Anteil dieser Comonomeren an der Gesamtmonomerenmenge beträgt bis zu 25 Gew.-%, vorzugsweise 0,1 bis 15 Gew.-%.
g) Über Carbonylgruppen vernetzbare oder selbstvernetzende Comonomere aus der Gruppe Diacetonacrylamid, Allylacetoacetat, Vinylacetoacetat sowie Acetoacetoxyethyl(meth)acrylat. Der Anteil dieser Comonomere an der Gesamtmonomerenmenge beträgt bis zu 10 Gew.-%, vorzugsweise 0,01 bis 5 Gew.-%.

Der Anteil der neben den Vinylestereinheiten im Polymerisat enthaltenen Comonomereinheiten der Gruppen b) bis g) kann zusammengenommen bis zu 50 Gew.-% betragen.

Die unter Einsatz des erfindungsgemäßen Redoxkatalysatorsystems hergestellten Dispersionen werden insbesondere durch polymere Stabilisatoren (Schutzkolloide) stabilisiert. Beispielsweise geeignet ist Polyvinylalkohol, insbesondere Polyvinylalkohol vom Hydrolysegrad 60 bis 100 Mol-%, vorzugsweise 70 bis 98 Mol-%, und Viskositäten der 4 Gew.-%igen wäßrigen Lösungen bei 20 °C von 2 bis 70 mPa·s.

Weiterhin können als Schutzkolloide natürliche oder synthetische Polymere, z. B. Derivate von Polyvinylalkoholen, veretherte Cellulosederivate, beispielsweise Hydroxyethylcellulose oder Carboxymethylcellulose, eingesetzt werden. Diese können entweder alleine oder in Kombination mit Polyvinylalkohol verwendet werden. Ebenfalls geeignet sind Polyvinylpyrrolidon, Stärken, Dextrin, Guar, Alginate, Proteine wie Casein oder Gelatine, Polycarbonsäuren wie Poly(meth)acrylsäure, Poly(methacrylamid) sowie Copolymere der Maleinsäure oder des Maleinsäureanhydrids mit ethylenisch ungesättigten Verbindungen wie Methylvinylether oder Styrol. Bezogen auf den Feststoffanteil des Polymeren, beträgt der Anteil der Schutzkolloide vorzugsweise 1 bis 20 Gew.-%, insbesondere 2 bis 13 Gew.-%.

Zusätzlich zu den Schutzkolloiden können bis zu 10 Gew.-%, vorzugsweise 0,1 bis 2 Gew.-%, bezogen auf den Feststoffanteil des Polymerisats, nichtionische und/oder anionische Emulgatoren in der Polymerisationsflotte mitverwendet werden. Beispiele hierfür sind Alkylarylpolyglykolether und Alkylpolyglykolether mit jeweils 8 bis 50 mol Ethylenoxid-Einheiten, Blockcopolymere des Ethylenoxids mit Propylenoxid, Alkyl- oder Alkylarylsulfonate, Alkylsulfate, Alkyl- und Arylethersulfate und -phosphate mit jeweils vorzugsweise 8 bis 18 Kohlenstoff-Atomen im lipophilen und bis zu 50 Ethylenoxid- oder Propylenoxid-Einheiten im hydrophilen Teil sowie Mono- oder Diester der Sulfobernsteinsäure oder Alkylphenole mit jeweils vorzugsweise 8 bis 18 Kohlenstoffatomen im Alkylrest.

Zur erfindungsgemäßen Herstellung der Dispersionen kann prinzipiell mit den üblichen kontinuierlichen oder diskontinuierlichen Prozessen der radikalischen Emulsionspolymerisation unter Zuhilfenahme gängiger Reaktionsgefäße wie Schlaufen- oder Rührreaktoren verfahren werden. Vorzugsweise werden diskontiniuierliche Verfahren wie Batch-, kombinierte Batch/Zulauf-, reine Zulaufverfahren oder Zulaufverfahren auf eine Partikelsaat angewandt. Besonders bevorzugt ist ein reines Monomerzulaufverfahren.

Von den einzelnen Komponenten des Redoxkatalysatorsystems, den Oxidationsmitteln und den erfindungsgemäßen Hydrogensulfitaddukten an polyfunktionelle Aldehyde mit mindestens 3 Kohlenstoffatomen wird mindestens eine, bevorzugt beide, während der Polymerisation in Form wäßriger Zuläufe zudosiert. Die Hydrogensulfitaddukte können auch "in situ" durch Reaktion der freien polyfunktionellen Aldehyde mit Alkalipyrosulfiten oder Alkalihydrogensulfiten, entweder in der wäßrigen Lösung des Zulaufs oder direkt in der Dispersion während der Polymerisation hergestellt werden.

Besteht die Reduktionskomponente neben den wenigstens bifunktionellen, vollständig als Hydrogensulfitaddukt maskierten Aldehyden mit mindestens 3 Kohlenstoffatomen noch aus einer oder weiteren Reduktionskomponenten, so wird diese vorzugsweise zusammen mit dem maskierten polyfunktionellen Aldehyd zudosiert. Zum Starten der Polymerisation können kleine Mengen, vorzugsweise < 20 Gew.-% der Gesamtmenge, der Oxidations- und/oder Reduktionsmittel zusammen in der Polymerisationsflotte vorgelegt werden.

Die Polymerisation wird bei einem pH-Wert durchgeführt, bei dem vorzugsweise unter den Polymerisationsbedingungen keine pH-bedingte Spaltung des Hydrogensulfitaddukts stattfindet. Dieser Bereich liegt oberhalb eines pH-Wertes von 4, vorzugsweise oberhalb eines Wertes von 4,5, insbesondere oberhalb von 5. Zur Aufrechterhaltung dieses pH-Wertes können übliche Puffersalze wie Alkaliacetate, -phosphate und -carbonate verwendet werden.

Die Reaktionstemperatur beträgt während der gesamten Reaktion 0 °C bis 100 °C, vorzugsweise 30 bis 95 °C, insbesondere 45 bis 90 °C.

Gegenstand der Erfindung ist auch eine Kunststoffdispersion, die nach dem erfindungsgemäßen Verfahren erhalten werden kann.

Die Kunststoffdispersionen sind feindispers, stabil und Koagulat-frei. Der Feststoffgehalt der erfindungsgemäßen Dispersion beträgt vorzugsweise 20 bis 65 Gew.-%, insbesondere 30 bis 60 Gew.-%. Die erfindungsgemäß hergestellten Kunststoffdispersionen enthalten an das Emulsionspolymerisat gebundene, zur Vernetzung befähigte, maskierte Aldehydgruppen, die über das Redoxkatalysatorsystem eingebracht worden sind.

Die erfindungsgemäß hergestellten Kunststoffdispersionen können auch, im Bedarfsfall unter Zusatz üblicher Additive wie Antibackmittel, sprüh- oder gefriergetrocknet werden. Im Falle einer Sprühtrocknung wird die Temperatur des Trägergases vorzugsweise so gewählt, daß keine thermische Spaltung der als Hydrogensulfit-Addukt blockierten Aldehydgruppen eintritt. Aus den erhaltenen Dispersionspulvern sind durch Redispergieren wieder wäßrige Kunststoffdispersionen erhältlich. Die dazu erforderlichen Verfahren sind dem Fachmann geläufig.

Die Kunststoffdispersion wird vorzugsweise durch Zusatz von 1 bis 10 Gew.-%, bezogen auf die Dispersion, einer sauren, durch das Schutzkolloid Polyvinylalkohol komplexierbaren Verbindung, insbesondere einer wäßrigen Lösung von Aluminiumchlorid, Aluminiumnitrat, Zirkonoxychlorid oder Phosphorsäure aktiviert. Der pH-Wert der solchermaßen modifizierten Kunststoffdispersion beträgt vorzugsweise 2,5 bis 4.

Die Verfilmungen der unter Verwendung des erfindungsgemäßen Redoxkatalysatorsystems als Polymerisationsinitiator hergestellten, mit Polyvinylalkohol als Schutzkolloid stabilisierten Polyvinylesterdispersionen, insbesondere der auf Basis von Polyvinylacetat, weisen ohne die Mitverwendung von gegebenenfalls Formaldehyd-abspaltenden, vernetzbaren Comonomeren oder nachträglichen Zusätzen von gegebenenfalls Formaldehyd-abgebenden Vernetzungsmitteln bei Anwesenheit von sauren, durch das Schutzkolloid komplexierbaren Verbindungen, beispielsweise Aluminium(III)salzen, )salzen, überragende Wasserresistenz auf. Der erfindungsgemäßen Dispersion können weitere übliche Additive zugesetzt werden, beispielsweise gegebenenfalls weitere Neutralisationsmittel, Filmbildehilfsmittel zur MFT-Erniedrigung, Weichmacher, Entschäumer, Füllstoffe und Konservierungsmittel.

Weiterer Gegenstand der Erfindung ist die Verwendung der erfindungsgemäßen Dispersionen als Klebstoffe, insbesondere für semiporöse und poröse Substrate, vorzugsweise für normgerechte Verklebungen von Holz, wobei die Qualitätsstufe D4 der Prüfnorm DIN EN 204 erreicht werden kann.

Klebverbindungen aus den mit Hilfe des erfindungsgemäßen Katalysatorsystems hergestellten Polyvinylesterdispersionen besitzen eine überragende Wasserbeständigkeit. Sie genügen damit bei Verwendung als Holzleim gemäß der Prüfnorm DIN EN 204 wenigstens der Beanspruchungsgruppe D2, vorzugsweise D3, insbesondere der Prüfnorm D4. Die sauer aktivierten Polyvinylesterdispersionen eignen sich damit besonders für die Verwendung in Innenräumen mit extremen Klimaschwankungen und Wassereinwirkung, beispielsweise in Hallenbädern und Duschkabinen, sowie für die Außenanwendung mit hohen klimatischen Einflüssen, beispielsweise für Fenster und Außentüren. Weiterhin sind sie hervorragend für die Hochfrequenzverleimung verwendbar.

Weitere Anwendungsbeispiele sind wasserfeste Verklebungen von Papier, Pappe, Wellpappe, Schaumstoff, Zement, Leder, Textil oder Preßschichtstoffen, als Fußboden-, Wand- oder Deckenklebstoff oder als Möbelfolien- oder Teppichrückenkleber, wasserfeste Bindemittel für Holzfaserplatten oder Faserleder sowie Bindemittel für Dämm-Materialien aus Papier- oder Kunststoff-Fasern oder als Bindemittel für Textil und Non-Woven.

Die folgenden Beispiele dienen zur Erläuterung der Erfindung. Alle Angaben von Teilen und Prozenten beziehen sich auf das Gewicht, falls nicht anders vermerkt.

### Beispiele

### Als Reduktionskomponenten verwendete Hydrogensulfit-Addukte an bifunktionelle Aldehyde für Beispiele 1-3 und Vergleichsbeispiel 1

Es wurden im Handel erhältliche Muster von Glutaraldehydbis(natriumhydrogensulfit) (für Beispiele 1 und 2) und Glyoxalbis(natriumhydrogensulfit)-Monohydrat (für Vergleichsbeispiel 1) verwendet.
Succinaldehydbis(natriumhydrogensulfit) (für Beispiel 3) und Butyraldehyd(natriumhydrogensulfit) (für Vergleichsbeispiel 3) wurden nach einschlägiger Methode durch Umsetzung von Succinaldehyd bzw. Butyraldehyd mit Natriumhydrogensulfit in wäßriger Lösung hergestellt, durch Zusatz von Methanol ausgefällt, mit Methanol gewaschen und bei Raumtemperatur im Vakuum getrocknet. Eine iodometrische Gehaltsanalyse ergab für die Produkte folgende Zusammensetzungen:

**Tabelle 1:**

| Iodometrische Analyse der verwendeten Hydrogensulfit-Addukte: | | |
|---|---|---|
| Produkt | Gehalt an Hydrogensulfitaddukt | Gehalt an freiem NaHSO₃ |
| Glyoxalbis(natriumhydrogensulfit)-Monohydrat | 91,5 % | 2,8 % |
| Succinaldehydbis(natriumhydrogensulfit) | > 99 % | nicht bestimmbar |
| Glutaraldehydbis(natriumhydrogensulfit | 98,3 % | 0,53 % |
| Butyraldehyd(natriumhydrogensulfit) | 92,8 % | 0,30 % |

### Beispiel 1

In einem 10 l-Glasrührkesselreaktor mit Ankerrührer, der mit Zulaufmöglichkeiten, Rückflußkühler, Mantelheizung und -kühlung versehen ist, wird eine Polymerisationsflotte, bestehend aus 400 g ®Mowiol 18-88 (Hoechst AG, teilverseifter Polyvinylalkohol vom Hydrolysegrad 88 Mol-%), 5,5 g Natriumacetat und 3,5 g ®Agitan 280 (Münzing-Chemie, Entschäumungsmittel) in 3510 g entionisiertem Wasser vorgelegt. Die Flotte hat einen pH-Wert von 5,7. Zur Flotte wird eine Lösung von 0,32 g Glutaraldehydbis(natriumhydrogensulfit) in 12,8 g Wasser gegeben und der Reaktor aufgeheizt. Bei einer Innentemperatur von 57 °C werden 350 g Vinylacetat in die Flotte einemulgiert. Bei einer Innentemperatur von 60 °C wird die Polymerisation durch Zugabe einer Lösung von 0,16 g tert.-Butylhydroperoxid (t-BHP, 70 %ig in Wasser) in 26,2 g Wasser gestartet. Sobald der Ansatz eine Innentemperatur von 67 °C erreicht hat, werden 4 getrennte Zuläufe linear innerhalb von 3 Stunden zudosiert.

| | |
|---|---|
| Zulauf 1 | 3650 g Vinylacetat |
| Zulauf 2 | 31,7 g Glutaraldehydbis(natriumhydrogensulfit) und 1,1 g NaHCO₃ in 167,1 g Wasser |
| Zulauf 3 | 1,45 g tert.-Butylhydroperoxid (70 %ig in Wasser) in 198,55 g Wasser |
| Zulauf 4 | 15 g NaHCO₃ in 170 g Wasser |

Über die Manteltemperatur wird die Polymerisation so geführt, daß bei schwachem Rückfluß die Innentemperatur während der Dosierung allmählich von 67 °C auf ca. 80 °C ansteigt. Dann wird noch eine Stunde nach Beendigung der Zuläufe bei 80 °C nachpolymerisiert und anschließend mit Zugaben von wäßrigen Lösungen von 5,4 g Wasserstoffperoxid (30 %ig) und 1,6 g Ascorbinsäure entmonomerisiert. Anschließend wird mit 10 %iger Natronlauge der etwas abgefallene pH-Wert von 5,2 auf mindestens 6 eingestellt (Verbrauch ca. 60 g) und 2 % Butyldiglykolacetat als Filmbildehilfsmittel eingerührt. Es wurde eine koagulatfreie Dispersion mit einem Feststoffgehalt von 51,7 % und einer Viskosität nach Brookfield RVT 6/20 (23 °C) von 26,3 Pa·s erhalten.

### Beispiel 2

Gemäß der Rezeptur von Beispiel 1 wurde eine Dispersion hergestellt mit dem Unterschied, daß nur 0,16 g Glutaraldehydbis(natriumhydrogensulfit) zum Starten in der Flotte verwendet wurde und daß als Zulauf 2 eine Lösung von 15,8 g Glutaraldehydbis(natriumhydrogensulfit) mit 1,1 g NaHCO₃ in 167,1 g Wasser zudosiert wurde. Man erhielt eine koagulatfreie Dispersion mit einem Feststoffgehalt von 51,7 % und einer Viskosität nach Brookfield RVT 6/20 (23 °C) von 26,9 Pa·s.

### Beispiel 3

Gemäß der Rezeptur von Beispiel 1 wurde eine Dispersion hergestellt mit dem Unterschied, daß 0,30 g Succinaldehydbis(natriumhydrogensulfit) zum Starten in der Flotte verwendet wurde und daß als Zulauf 2 eine Lösung von 29,73 g Succinaldehydbis(natriumhydrogensulfit) mit 0,27 g NaHCO₃ in 167,1 g Wasser zudosiert wurde. Man erhielt eine koagulatfreie Dispersion mit einem Feststoffgehalt von 52 % und einer Viskosität nach Brookfield RVT 6/20 (23 °C) von 31,1 Pa·s.

### Vergleichsbeispiel 1

Analog Beispiel 1 stellte man eine Dispersion her mit dem Unterschied, daß Glyoxalbis(natriumhydrogensulfit)-Monohydrat als Reduktionsmittel verwendet wurde. Man startete mit 0,30 g Glyoxalbis(natriumhydrogensulfit)-Monohydrat und verwendete als Zulauf 2 eine Lösung von 29,4 g Glyoxalbis(natriumhydrogensulfit)-Monohydrat und 0,73 g NaHCO₃ in 330,1 g Wasser. Es wurde statt mit ca. 60 g NaOH 10 %ig mit 112,6 g NaOH 10 %ig ein pH-Wert von 6,25 eingestellt. Als Ergebnis erhielt man eine koagulatfreie Dispersion mit einem Feststoffanteil von 49,6 % und einer Viskosität nach Brookfield RVT 6/20 (23 °C) von 15,1 Pa·s.

### Vergleichsbeispiel 2

Analog Beispiel 1 stellte man eine Dispersion her mit dem Unterschied, daß Natriumhydrogensulfit (aus Natriumpyrosulfit freigesetzt) als Reduktionsmittel verwendet wurde. Man startete mit 0,014 g Natriumpyrosulfit und verwendete als Zulauf 2 eine Lösung von 1,43 g Natriumpyrosulfit und 0,83 g NaHCO₃ in 167,1 g Wasser, wobei dieser Zulauf und der Zulauf 3 etwas früher als der Monomerzulauf 1 begonnen wurde. Als Ergebnis wurde eine koagulatfreie Dispersion mit einem Feststoffanteil von 51,5 % und einer Viskosität nach Brookfield RVT 6/20 (23 °C) von 26,0 Pa·s erhalten.

### Vergleichsbeispiel 3

Analog Beispiel 1 stellte man eine Dispersion her mit dem Unterschied, daß Butyraldehyd(natriumhydrogensulfit) als Reduktionsmittel verwendet wurde. Man startete mit 0,39 g Butyraldehyd(natriumhydrogensulfit) und verwendete als Zulauf 2 eine Lösung von 38,4 g Butyraldehyd(natriumhydrogensulfit) und 1,88 g NaHCO₃ in 167,1 g Wasser. Es wurde mit ca. 60 g NaOH 10 %ig ein pH-Wert von 6 eingestellt. Als Ergebnis erhielt man eine koagulatfreie Dispersion mit einem Feststoffanteil von 52,7 % und einer Viskosität nach Brookfield RVT 6/20 (23 °C) von 22,2 Pa·s.

### Prüfung der Polyvinylacetat-Dispersionen als Holzklebstoff

Je 100 Teile der Dispersionen aus den Beispielen wurden mit 5 Teilen einer 28%igen Lösung von Aluminiumchlorid in Wasser versetzt. Die Holzleim-technische Prüfung erfolgte in Anlehnung an DIN EN 204/D4. Die Herstellung der Prüflinge erfolgt nach der Vorgehensweise der DIN EN 205. Die Verleimung und Prüfung wird unter Berücksichtigung folgender Kenndaten durchgeführt:

| | |
|---|---|
| Reifezeit nach AlCl₃-Zusatz | 2 Stunden |
| Leimauftrag | 150 ± 20 g/m² beidseitiger Auftrag |
| Offene Wartezeit | 3 Minuten |
| Geschlossene Wartezeit | 3 Minuten |
| Preßzeit | 2 Stunden |
| Preßdruck | 0,7 ± 0,1 N/mm² |
| Anzahl Prüfkörper pro Prüffolge | 20 |
| Lagerungsfolge D4/5 | 7 Tage Normalklima^{*)} |
| | 6 Stunden in kochendem Wasser |
| | 2 Stunden in kaltem Wasser |
| Prüftemperatur | 23 °C ± 2 °C |
| Vorschubgeschwindigkeit | 50 mm/Min. |

| | |
|---|---|
| Normalklima: ^{*)} 23 ± 2 °C und 50 ± 5 % relative Luftfeuchte | |

Die Einordnung in die Beanspruchungsgruppe D4/5 erfolgt bei einer Reißfestigkeit von ≥ 4 N/mm².

Die erhaltenen Werte für die Naßklebfestigkeiten sind in der Tabelle 2 aufgeführt. Dort finden sich ebenfalls die Stoffmengen der verwendeten Komponenten der in den Beispielen verwendeten Katalysatorsysteme. (Die Angaben beziehen sich auf 1 kg Monomer.)

**Tabelle 2:**

| **Katalysatorsysteme und Naßklebfestigkeiten der Dispersionen** | | | | | |
|---|---|---|---|---|---|
| Beispiel | NaHSO₃-(Bis)-Addukt an | t-BHP [mmol] | NaHSO₃-[Bis]-Addukt [mmol] | freies NaHSO₃ [mmol] | D4/5 [N/mm²] |
| 1 | Glutaraldehyd | 3,13 | 25,54 | 0,41 | 5,5 |
| 2 | Glutaraldehyd | 3,13 | 12,77 | 0,205 | 3,9 |
| 3 | Succinaldehyd | 3,13 | 25,54 | - | 4,6 |
| V1 | Glyoxal | 3,13 | 25,54 | 2 | 0,5 |
| V2 | - | 3,13 | - | 3,8 | alle Prüfkörper auseinandergefallen |
| V3 | Butyraldehyd | 3,13 | 51,08 | 0,28 | alle Prüfkörper auseinandergefallen |

Aus dieser Tabelle wird ersichtlich, daß die Klebverbindungen der verfilmten Dispersionen der erfindungsgemäßen Beispiele 1 bis 3 mengenabhängig vom Hydrogensulfitaddukt einen hohen Grad an Kochwasserbeständigkeit aufweisen. Beispiele 1 und 3 bestehen die Lagerungsfolge D4/5 für die Kochwasserbeständigkeit der Klebverbindungen der Prüfnorm DIN EN 204 D4 mit großer Sicherheit. Das nicht der Erfindung entsprechende Vergleichsbeispiel V1 zeigt, daß das unter Verwendung von äquivalenten Mengen Glyoxalbis(natriumhydrogensulfit) als Bestandteil des Reduktionsmittelsystems hergestellte Produkt die Prüfnorm weit verfehlt und nicht zu einer Lösung der erfindungsgemäßen Aufgabe führt. Die ausschließliche Verwendung von Natriumhydrogensulfit als Reduktionsmittel in Vergleichsbeispiel V2 ergibt keinen Effekt hinsichtlich der Wasserfestigkeit.

Die Verwendung einer zu den in den Beispielen 1 und 3 verwendeten Aldehydaddukten zweifach molaren (und damit äquivalenten) Stoffmenge an Butyraldehyd(natriumhydrogensulfit) als einem Vertreter der Hydrogensulfitaddukte an monofunktionelle Aldehyde mit einer im Vergleich zum verwendeten Succinaldehyd im Beispiel 3 identischen Zahl an Kohlenstoffatomen ergibt im nicht erfindungsgemäßen Vergleichsbeispiel V3 ebenfalls keinen Effekt im gewünschten Ausmaß hinsichtlich der Wasserbeständigkeit der Klebfugen.

### Freier Formaldehyd

Der Nachweis von freiem Formaldehyd wurde UV/VIS-spektrometrisch im Zentrifugenserum der nicht mit Aluminiumchlorid modifizierten Dispersionen aus den erfindungsgemäßen Beispielen 1 bis 3 mit Hilfe der Acetylaceton-Methode durchgeführt. (Herstellung der Acetylaceton-Reagenzlösung siehe H. Petersen und N. Petri, Melliand Textilberichte **66**, 363 (1985)). Die nachfolgend aufgeführten Werte bewegten sich allesamt in der Nähe der Nachweisgrenze :

**Tabelle 3:**

| **Freie Formaldehydgehalte der Dispersionen aus den Beispielen 1-3:** | |
|---|---|
| Beispiel | freier HCHO |
| 1 | 3 ppm |
| 2 | 5 ppm |
| 3 | 2 ppm |

## Patentansprüche

1. Redoxkatalysatorsystem für die radikalische Emulsionspolymerisation ethylenisch ungesättigter Verbindungen, bestehend aus mindestens einem Oxidationsmittel und mindestens einem Reduktionsmittel, das einen wenigstens bifunktionellen, vollständig als Hydrogensulfitaddukt maskierten Aldehyd mit mindestens 3 Kohlenstoffatomen enthält.

2. Redoxkatalysatorsystem nach Anspruch 1, dadurch gekennzeichnet, daß als Oxidationsmittel ein organisches Hydroperoxid enthalten ist.

3. Redoxkatalysatorsystem nach Anspruch 1, dadurch gekennzeichnet, daß als Reduktionsmittel ein wasserlösliches oder in Wasser suspendierbares Bisalkalihydrogensulfitaddukt enthalten ist.

4. Redoxkatalysatorsystem nach Anspruch 1, dadurch gekennzeichnet, daß es aus tert. Butylhydroperoxid und einem Reduktionsmittel aus der Gruppe Glutaraldehydbis(natriumhydrogensulfit) und Succinaldehydbis(natriumhydrogensulfit) besteht.

5. Redoxkatalysatorsystem nach Anspruch 1, dadurch gekennzeichnet, daß das molare Verhältnis zwischen den oxidierenden Gruppen im Oxidationsmittel und den reduzierenden Gruppen im Reduktionsmittel 1 0,01 bis 1 : 100 beträgt.

6. Verfahren zur Herstellung von Kunststoffdispersionen durch Emulsionspolymerisation von Vinylverbindungen unter Einsatz des Redoxkatalysatorsystems nach Anspruch 1.

7. Verfahren nach Anspruch 6, dadurch gekennzeichnet, daß als Vinylverbindungen Vinylester mit 1 bis 18 Kohlenstoffatomen im Säurerest eingesetzt werden.

8. Verfahren nach Anspruch 6, dadurch gekennzeichnet, daß das Oxidationsmittel und das Reduktionsmittel des Redoxkatalysatorsystems parallel über separate Zuläufe zudosiert werden.

9. Kunststoffdispersion, erhältlich nach dem Verfahren nach Anspruch 6, dadurch gekennzeichnet, daß sie an das Emulsionspolymerisat gebundene, zur Vernetzung befähigte, maskierte Aldehydgruppen enthält.

10. Kunststoffdispersion nach Anspruch 9, dadurch gekennzeichnet, daß sie 1 bis 10 Gew.-%, bezogen auf die Dispersion, einer sauren, durch das Schutzkolloid Polyvinylalkohol komplexierbaren Verbindung enthält.

11. Verwendung der Kunststoffdispersion nach Anspruch 9 als Bindemittel oder Klebstoff.

12. Verwendung der Kunststoffdispersion nach Anspruch 10 als Klebstoff für semiporöse und poröse Substrate.

## Claims

1. A redox catalyst system for the free-radical emulsion polymerization of ethylenically unsaturated compounds, comprising at least one oxidizing agent and at least one reducing agent comprising an at least bifunctional aldehyde having at least 3 carbon atoms which is completely masked as bisulfite adduct.

2. A redox catalyst system as claimed in claim 1, wherein an organic hydroperoxide is present as oxidizing agent.

3. A redox catalyst system as claimed in claim 1, wherein a water-soluble or water-suspendable bis(alkali metal hydrogen sulfite) adduct is present as reducing agent.

4. A redox catalyst system as claimed in claim 1, comprising tert-butyl hydroperoxide and a reducing agent selected from the group consisting of glutaraldehydebis(sodium hydrogen sulfite) and succinaldehydebis (sodium hydrogen sulfite).

5. A redox catalyst system as claimed in claim 1, wherein the molar ratio of the oxidizing groups in the oxidizing agent to the reducing groups in the reducing agent is from 1:0.01 to 1:100.

6. A process for preparing polymer dispersions by emulsion polymerization of vinyl compounds using the redox catalyst system as claimed in claim 1.

7. The process as claimed in claim 6, wherein vinyl esters having from 1 to 18 carbon atoms in the acid radical are used as vinyl compounds.

8. The process as claimed in claim 6, wherein the oxidizing agent and the reducing agent of the redox catalyst system are metered in in parallel via separate feed streams.

9. A polymer dispersion obtainable by the process as claimed in claim 6, containing masked aldehyde groups which are bound to the emulsion polymer and are capable of crosslinking.

10. A polymer dispersion as claimed in claim 9, containing from 1 to 10% by weight, based on the dispersion, of an acid compound which can be complexed by the protective colloid polyvinyl alcohol.

11. Use of the polymer dispersion as claimed in claim 9 as binder or adhesive.

12. Use of the polymer dispersion as claimed in claim 10 as adhesive for semiporous and porous substrates.

## Revendications

1. Système de catalyseurs redox pour la polymérisation radicalaire en émulsion de composés éthyléniquement insaturés, constitué d'au moins un agent d'oxydation et d'au moins un agent de réduction, qui contient un aldéhyde au moins bifonctionnel, complètement masqué sous la forme d'adduit d'hydrogénosulfite, ayant au moins 3 atomes de carbone.

2. Système de catalyseurs redox selon la revendication 1, caractérisé en ce qu'il contient comme agent d'oxydation un hydroperoxyde organique.

3. Système de catalyseurs redox selon la revendication 1, caractérisé en ce qu'il contient comme agent de réduction un adduit de bis-hydrogénosulfite alcalin hydrosoluble ou pouvant être mis en suspension dans l'eau.

4. Système de catalyseurs redox selon la revendication 1, caractérisé en ce qu'il est constitué d'hydroperoxyde de tert.-butyle et d'un agent de réduction choisi parmi le glutaraldéhydebis(hydrogénosulfite de sodium) et le succinaldéhydebis(hydrogénosulfite de sodium).

5. Système de catalyseurs redox selon la revendication 1, caractérisé en ce le rapport molaire entre les groupes oxydants dans l'agent d'oxydation et les groupes réducteurs dans l'agent de réduction est de 1:0,01 à 1:100.

6. Procédé de préparation de dispersions de matières synthétiques au moyen de polymérisation en émulsion de composés vinyliques en utilisant le système de catalyseurs redox selon la revendication 1.

7. Procédé selon la revendication 6, caractérisé en ce qu'on utilise comme composés vinyliques des esters de vinyle avec 1 à 18 atomes de carbone dans le groupe acide.

8. Procédé selon la revendication 6, caractérisé en ce que l'agent d'oxydation et l'agent de réduction du système de catalyseurs redox sont introduits par ajout dosé en parallèle par des alimentations séparées.

9. Dispersion de matière synthétique, qu'on peut obtenir avec le procédé selon la revendication 6, caractérisée en ce qu'elle contient des groupes aldéhyde masqués, liés au polymérisat en émulsion, capables de réticulation.

10. Dispersion de matière synthétique selon la revendication 9, caractérisée en ce qu'elle contient 1 à 10% en poids, par rapport à la dispersion, d'un composé acide, complexable par le colloïde protecteur alcool polyvinylique.

11. Utilisation de la dispersion de matière synthétique selon la revendication 9 comme liant ou colle.

12. Utilisation de la dispersion de matière synthétique selon la revendication 10 comme colle pour des substrats semi-poreux et poreux.
